# EUROPEAN PATENT APPLICATION

(11) **EP 4 641 590 A1**
(43) Date of publication of application: **29.10.2025**
(21) Application number: 24172099.4
(22) Date of filing: 24.04.2024
(51) Int. Cl.: H01B 3/30, C08L 81/02

(54) **INSULATED WIRE COMPRISING INSULATING LAYER MADE OF A POLY(ARYLENE SULFIDE) COMPOSITION**

(71) Applicant: Syensqo Specialty Polymers USA, LLC, Alpharetta GA 30005-3914 (US)
(72) Inventor: FAYOLLE, Caroline, Saint-Fons (FR); SANSEAU, Olivier, Saint-Fons (FR); KANICKI, Eric, Alpharetta (US); SEO, Jiho, Alpharetta (US); CASAMENTO, Franceso, Bollate (IT)
(74) Representative: Ferri, Isabella

(57) **Abstract**

The present invention relates to an insulated wire comprising an insulating layer made of a poly(arylene sulfide) composition, possessing improved mechanical performances and outstanding thermal ageing resistance, to a process for its manufacturing, as well as to an article, part or composite material comprising said insulated wire.

## Description

### Technical Field

The present invention relates to insulated wires, coils, rotating electrical machines, electrical/electronic equipment, and a method of manufacturing the same.

### Background Art

Generally, insulated wires include a conductor and an insulating layer coating an outer circumference of the conductor. The insulated wire is wound and processed into a coil, and for example, is incorporated into electrical appliances such as electric motors. The coil is processed by winding it around a small core with high tension and high density. Indeed, in some instances, coil manufacturing processes may create challenging geometries or profiles which have a radius bend equal to the thickness of the conductor. This may require the insulating layer to have a minimum elongation of 40%. Thus, processing stress added on the insulated wire, and in particular to the insulating layer around the conductor, is likely to be great. Therefore, the insulating layer is required to have a high adhesion with conductors and good ductility so as not to be peeled-off from the conductors or so as not to be cracked during coil processing.

Further, since electrical motors are driven at a high current for high output, an operating temperature of the coil is likely to be high. Therefore, the insulated wire is also required to have a high heat resistance.

Poly(arylene sulfide) (PAS) polymers are semi-crystalline thermoplastic polymers having excellent mechanical properties, such as high tensile modulus and high tensile strength, and stability towards thermal degradation and chemical reactivity. They are also characterized by excellent melt processing, e.g. by extrusion.

This broad range of properties makes PAS polymers suitable for a large number of applications, for example in the automotive, electrical, electronic, aerospace and appliances markets.

Despite the above advantages, PAS polymers may be too inflexible or stiff for some applications in which a high degree of flexibility, resilience, or toughness are desired.

For addressing toughness and flexibility, several prior art documents describe the preparation of compatible blends of poly(arylene sulfide) polymers and epoxy-functionalized siloxane polymers. For example, US 5,324,796 describes compositions comprising poly(phenylene sulfide) polymers blended with high molecular weight epoxy-functionalized siloxane polymers, wherein the weight ratio between the siloxane and poly(phenylene sulfide) polymers is 0.1-25:100 and wherein the poly(phenylene sulfide) polymers are branched by heat curing in an oxidative atmosphere.

### Summary of invention

In a first aspect, the present invention relates to an insulated wire comprising:
- a conductor; and
- an insulating layer arranged on an outer circumference of the conductor, wherein the insulating layer is made of a composition, [composition (C)], comprising or consisting of:
   - a poly(arylene sulfide) polymer [polymer (PAS)];
   - 0.10 to 5.00 wt% of an alkoxysilane [compound (AKS)];
   - 0.00 to 5.00 wt% of a polyorganosiloxane polymer having at least one epoxy functional group [polymer (POS)];
   - 0.00 to 10.00 wt% of an inorganic filler; and
   - 0.00 to 1.00 wt% of an antioxidant,
   all percentages being referred to the total weight of the composition (C).

In a second aspect, the present invention relates to a process for preparing said insulated wire, said process comprising extruding composition (C) on a surface of the conductor. Advantageously composition (C) provides good adhesion to the conductor in the absence of any adhesive or intermediate layer.

### Disclosure of invention

For the purposes of the present description:
- the use of parentheses before and after symbols or numbers identifying compounds, chemical formulae or parts of formulae has the mere purpose of better distinguishing those symbols or numbers from the rest of the text and hence said parentheses can also be omitted; -
- the expression "comprising" should be understood as meaning "comprising at least one". The expression "a" or "an" should be understood as meaning "at least one";
- the expression such as "Object P comprises at least the elements p1 , p2... pi" should also be understood as encompassing explicitly the embodiment wherein Object P consists essentially of the elements p1, p2 ...pi;
- "essentially" in this context means that some impurities, undesired species, unintentional compounds or the like could be present in Object P without impacting its targeted function and effect in the framework of the present invention;
- the expression "comprised between ... and ..." or "ranging from... to..." and the like should be understood as including the limits;
- "melting temperature (Tₘ)" or "Tₘ" or "melting point" is intended to indicate the melting temperature measured by differential scanning calorimetry (DSC) according to ASTM D3418 at 20°C/min;
- the term "halogen" includes fluorine, chlorine, bromine, and iodine, unless indicated otherwise;
- the adjective "aromatic" denotes any mono- or polynuclear cyclic group (or moiety) having a number of π electrons equal to 4n+2, where n is 1 or any positive integer; an aromatic group (or moiety) can be an aryl and arylene group (or moiety).

### The Insulated Wire

### Conductor

The insulated wire of the invention comprises a conductor. The conductor is generally a metal wire made of a metal having a high conductivity. For example, the conductor may be formed from copper, aluminum, annealed copper, oxygen-free copper, silver-plated copper, nickel plated copper, copper clad aluminum ("CCA"), silver, gold, a conductive alloy, a bimetal, carbon nanotubes, or any other suitable electrically conductive material.

The conductor may have any suitable dimensions and/or cross- sectional shapes, such as a circular or rectangular shape. As desired for certain cross-sectional shapes such as a rectangular cross-sectional shape, the conductor may have corners that are rounded, sharp, smoothed, curved, angled, truncated, or otherwise formed.

The conductor may have any suitable dimensions, such as any suitable gauge, diameter, height, width, cross-sectional area, etc. Rectangular conductors may typically have longer sides having a length between 500 µm and 20 mm, and shorter sides whose length may be between 500 µm and 10 mm. An example square conductor may have sides between 500 µm and 12 mm. An example round conductor may have a diameter between 200 µm and 12 mm. The conductor may also be a stranded wire formed by twisting a plurality of round wires. In addition, metal plating such as tin or nickel, may be applied on the surface of the conductor.

### The insulating layer

An insulating layer is provided on the outer circumference of the conductor so as to coat the conductor. The insulating layer is preferably in direct contact with the outer surface of the conductor.

For the avoidance of doubt, the expression "outer circumference" is used herein to refer to the external surface of the conductor.

The insulating layer has excellent electrical properties and its dielectric constant is 4.0 or less in a temperature range of 20°C to 180°C.

The thickness of the insulating layer is not particularly limited. However, 0.05 mm or more and 0.40 mm or less is preferable, and 0.10 mm or more and 0.30 mm or less is more preferable, and 0.15 mm or more and 0.20 mm or less is further preferable.

The insulating layer consists of composition (C) comprising or consisting of, preferably consisting of: a poly(arylene sulfide) polymer [polymer (PAS)]; 0.1 to 5.0 wt% of an alkoxysilane [compound (AKS)]; and optionally of one or more of a polyorganosiloxane polymer having at least one epoxy functional group [polymer (POS)]; an inorganic filler; and an antioxidant, as detailed here after.

### The poly(arylene sulfide) polymer [polymer (PAS)]

The poly(arylene sulfide) ("PAS") polymer comprises recurring units (R_{PAS1}) represented by the following formula:

[-Ar1-S-] (R_{PAS1})

wherein
-Ar₁- is selected from the group of formulae consisting of: 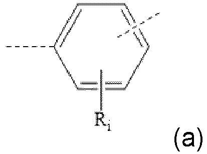 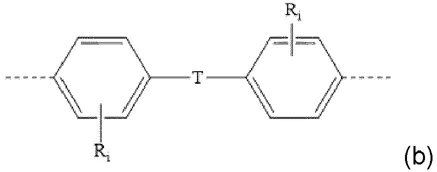 and 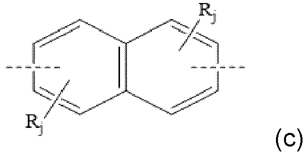
wherein:
   R, at each instance, is independently selected from the group consisting of a C₁-C₁₂ alkyl group, a C₇-C₂₄ alkylaryl group, a C₇-C₂₄ aralkyl group, a C₆-C₂₄ arylene group, and a C₆-C₁₈ aryloxy group;
   T is selected from the group consisting of a bond, -CO-, -SO₂-, -O-, - C(CH₃)₂-, -C(CF₃)₂-, phenyl and -CH₂-;
   i, at each instance, is an independently selected integer from 0 to 4;
   j, at each instance, is an independently selected integer from 0 to 3.

In formulae (a), (b) and (c), when i or j is zero, the corresponding benzyl rings are unsubstituted. Similar notation is used throughout the present description. Additionally, each formula (a) to (c) contains two dashed bonds, where one bond is to the explicit sulfur atom in the recurring unit (R_{PAS1}) and the other is a bond to an atom outside the recurring unit (R_{PAS1}) (e.g. an adjacent recurring unit). Analogous notation is used throughout the present specification.

Preferably, -Ar₁- is represented by either formula (a) or (b), more preferably by formula (a).

More preferably, -Ar₁- is represented by any of the following formulae:

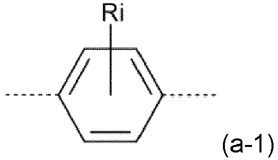

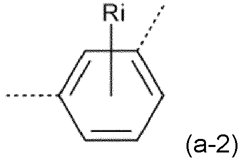

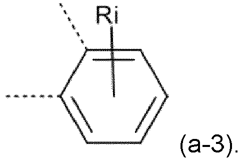

Still more preferably, -Ar₁- is represented by any of formulae (a-1), (a-2) and (a-3), where i is zero.

When units (R_{PAS1}) having -Ar₁- of formula (a-1) are present in combination with units whereas -Ar₁- is of any of formulae (a-2) and/or (a-3), the total concentration of recurring units (R_{PAS1}) whereas -Ar₁- is of any of formulae (a-2) and (a-3) in the polymer (PAS) is at most 10 mol%, at most 5 mol%, at most 3 mol%, at most 1 mol%, based on total amount of units (R_{PAS1}) whereas -Ar₁- is of any of formulae (a-1), (a-2) and (a-3).

Polymer (PAS) having units (R_{PAS1}) of formula (a1) where i is zero, as described above, i.e. having units (R_{PAS1}) of formula: 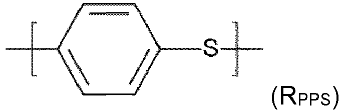 is referred to as poly(phenylene sulfide) (PPS) polymer.

Polymer (PPS) may additionally comprise units of any of formulae: 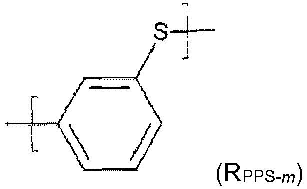 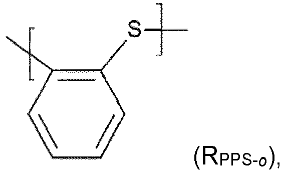 being understood that when polymer (PPS) further comprises units (R_{PPS-*m*}) and/or (R_{PPS-*o*}), the total concentration of recurring units (R_{PPS-*m*}) and/or (R_{PPS-*o*}) in the polymer (PPS) is at most 10 mol%, at most 5 mol%, at most 3 mol%, at most 1 mol%, based on total amount of units (R_{PPS}), (R_{PPS-*m*}) and (R_{PPS-*o*}).

In some embodiments, the total concentration of recurring units (R_{PAS1}) in the polymer (PAS) is at least 50 mol%, at least 60 mol%, at least 70 mol%, at least 80 mol%, at least 90 mol%, at least 95 mol%, at least 98 mol%, at least 99 mol% or at least 99.9 mol%.

In some embodiments, polymer (PAS) may include recurring units (R_{PAS2}) different from recurring units (R_{PAS1}), said recurring units (R_{PAS2}) being represented by the following formula:

[-Ar₂-S-] (R_{PAS2})

wherein:
-Ar₂- is represented by the following formula: 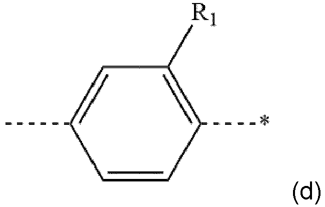
wherein R₁ is a C₁ to C₁₀ linear or branched alkyl group, preferably R₁ is - CH₃.

In formula (d), the dashed bond having a "*" indicates the bond to the explicit sulfur atom in recurring unit (R_{PAS2}) and the dashed bond without the "*" indicates a bond to an atom outside the recurring unit (R_{PAS2}). In other terms, in unit (R_{PAS2}), the R₁ substituent is in *ortho* position with respect to the -S- moiety.

In some embodiments, the polymer (PAS) can have additional recurring units, each distinct from each other and distinct from recurring units (R_{PAS1}) and (R_{PAS2}).

In some embodiments, the total concentration of recurring units (R_{PAS1}) and (R_{PAS2}) in the polymer (PAS) is at least 50 mol%, at least 60 mol%, at least 70 mol%, at least 80 mol%, at least 90 mol%, at least 95 mol%, at least 98 mol%, at least 99 mol% or at least 99.9 mol%.

As used herein, the molar concentration of recurring units in a polymer is relative to the total number of recurring units in that polymer, unless explicitly stated otherwise.

In some embodiments, the concentration of recurring unit (R_{PAS1}) in the polymer (PAS) is at least 50 mol%, at least 60 mol%, at least 70 mol%, at least 80 mol%, at least 85 mol%, at least 88 mol%, at least 90 mol%, at least 95 mol%, at least 97 mol%, at least 98 mol%, at least 98.5 mol%, or at least 99 mol%.

In some embodiments, the concentration of recurring unit (R_{PAS2}) in the polymer (PAS) may be of at least 0.5 mol%, at least 1 mol%, at least 1.5 mol%, at least 2 mol% or at least 2.5 mol%. In some embodiments, the concentration of recurring unit (R_{PAS2}) is no more than 15 mol%, no more than 12 mol%, no more than 10 mol%, or no more than 8 mol%.

In some embodiments, the number of moles of recurring unit (R_{PAS2}) in the polymer (PAS) may be from 0.5 mol% to 15 mol%, from 0.5 mol% to 12 mol%, from 0.5 mol% to 10 mol%, from 0.5 mol% to 8 mol%, from 1 mol% to 15 mol%, from 1 mol% to 12 mol%, from 1 mol% to 10 mol%, from 1 mol% to 8 mol%, from 2 mol% to 8 mol% or from 2.5 mol% to 8 mol%.

In some embodiments, the ratio of the number of recurring unit (R_{PAS2}) to the total number of recurring units (R_{PAS1}) and (R_{PAS2}) in the polymer (PAS) may be of at least 1 mol%, at least 1.5 mol%, at least 2 mol% or at least 2.5 mol%.

In some embodiments, the ratio of the number of recurring unit (R_{PAS2}) to the total number of recurring units (R_{PAS1}) and (R_{PAS2}) is no more than 15 mol%, no more than 12 mol%, no more than 10 mol%, or no more than 8 mol%.

While polymer (PAS) may comprise units (R_{PAS2}), preferred are embodiments whereas polymer (PAS) does not comprise any unit (R_{PAS2}), as detailed above. According to these embodiments, the concentration of recurring units (R_{PAS1}) in the polymer (PAS) is at least 50 mol%, at least 60 mol%, at least 70 mol%, at least 80 mol%, at least 90 mol%, at least 95 mol%, at least 98 mol%, at least 99 mol% or at least 99.9 mol%.

Most preferably, polymer (PAS) essentially consists of recurring units (R_{PAS1}), as detailed above. The expression "essentially consisting", when used for characterizing constituent moieties of polymer (PAS) is meant to indicate that minor amounts of spurious units (e.g. less than 0.1 mol%), impurities or chain ends may be present, without this modifying the advantageous attributes of polymer (PAS).

Most preferably, polymer (PAS) is a polymer (PPS), as described above, and most preferably is a polymer (PPS) essentially consisting of units (R_{PAS1}) of formula (R_{PPS}), as detailed above.

The polymer (PAS) may have a melt flow rate (at 315.6°C under a weight of 1.27 kg according to ASTM D1238, procedure B) of at most 700 g/10 min, more preferably of at most 500 g/10 min, even more preferably of at most 200 g/10 min, still more preferably of at most 50 g/10 min, yet more preferably of at most 35 g/10 min.

Preferably, the polymer (PAS) has a melt flow rate (at 315.6 °C under a weight of 1.27 kg according to ASTM D1238, procedure B) of at least 1 g/10 min, more preferably of at least 5 g/10 min, even more preferably of at least 10 g/10 min, still more preferably of at least 15 g/10 min.

The polymer (PAS) can be amorphous or semi-crystalline. As used herein, an amorphous polymer has an enthalpy of fusion ("ΔH_{f}") of no more than 5 Joules/g ("J/g"). The person of ordinary skill in the art will recognize that when the polymer (PAS) is amorphous, it lacks a detectable temperature of melting (Tₘ). Accordingly, where a polymer (PAS) has a Tₘ, the person of ordinary skill in the art will recognize that it refers to semi-crystalline polymer. Preferably, the polymer (PAS) is semi-crystalline. In some embodiments, the polymer (PAS) has a ΔH_{f} of at least 10 J/g, at least 20 J/g, at least, or at least 25 J/g. In some embodiments, the polymer (PAS) has a ΔH_{f} of no more than 90 J/g, no more than 70 J/g or no more than 60 J/g. In some embodiments, the polymer (PAS) has a ΔH_{f} of from 10 J/g to 90 J/g or from 20 J/g to 70 J/g. ΔH_{f} can be measured by differential scanning calorimeter (DSC), according to ASTM D3418.

Preferably, the polymer (PAS) has a melting point of at least 240°C, more preferably of at least 248°C, even more preferably of at least 250°C, when determined by differential scanning calorimeter (DSC) according to ASTM D3418.

Preferably, the polymer (PAS) has a melting point of at most 320°C, more preferably of at most 300°C, even more preferably of at most 295°C, when determined by differential scanning calorimeter (DSC) according to ASTM D3418.

Preferably, the polymer (PAS) has a weight-average molecular weight (Mw) of at least 40,000 g/mol, preferably 45,000 g/mol, more preferably of at least 50,000 g/mol, even more preferably of at least 55,000 g/mol, as determined by gel permeation chromatography.

Preferably, the polymer (PAS) has a weight-average molecular weight (Mw) of at most 120,000 g/mol, more preferably of at most 110,000 g/mol, even more preferably of at most 100,000 g/mol, still more preferably of at most 90,000 g/mol, as determined by gel permeation chromatography.

Preferably, the polymer (PAS) is such that it exhibits a calcium content of less than 200 ppm, as measured by X-ray Fluorescence (XRF) analysis calibrated with standards of known calcium content as determined by Inductively Coupled Plasma Optical Emission Spectrometry (ICP-OES) according to ASTM UOP714 - 07.

Exemplary poly(phenylene sulfide)polymers are commercially available as RYTON^{®} PPS from Solvay Specialty Polymers USA, L.L.C.

The polymer (PAS) may advantageously comprise at least one functional group at least one of its chain ends. According to some embodiments, the polymer (PAS) has functional groups at each end of its chain. As used herein, the term "chain" is intended to denote the longest series of covalently bonded atoms that together create a continuous chain in a molecule.

When present, preferably, the functional groups of polymer (PAS) are according to formula (I) below: 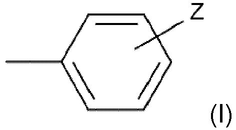 wherein Z is selected from the group consisting of halogen atoms (e.g. chlorine), carboxyl group, amino group, hydroxyl group, thiol group, acid anhydride group, isocyanate group, amide group, and derivatives thereof such as salts of sodium, lithium, potassium, calcium, magnesium, zinc.

When present, preferably, the functional groups exhibit reactivity towards the polymer (POS), and they are selected from the group consisting of carboxyl group, amino group, hydroxyl group, thiol group, acid anhydride group, isocyanate group, amide group, and derivatives thereof such as salts of sodium, lithium, potassium, calcium, magnesium, zinc.

Preferably, the functional groups are selected from the group consisting of hydroxyl group, thiol group, hydroxylate and thiolate.

Preferably, the polymer (PAS) is linear.

When functional groups are present, preferably, the polymer (PAS) is linear and comprises at least one reactive functional group at least one chain end. In an embodiment, the polymer (PAS) is linear and comprises at least one reactive functional group at each end of its chain.

### The alkoxysilane [compound (AKS)]

Composition (C) comprises at least one alkoxysilane, referred herein as "compound (AKS)".

Compound (AKS) is represented by the following formula: 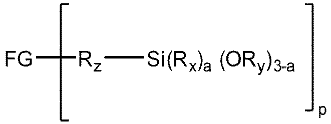 wherein a is an integer from 0 to 2; p is an integer from 1 to 3; each Rx is, independently of each other, selected from a linear, branched or cyclic C1 to C8 alkyl group; each Ry is, independently of each other, a linear or branched C1 to C4 alkyl group; each Rz is, independently of each other, a linear, branched or cyclic C1 to C12 alkanediyl group, optionally containing one or more heteroatom selected from oxygen, sulfur and nitrogen; and wherein FG is selected from the group consisting of hydrogen, an halogen or a functional group.

As defined in IUPAC recommendations 1994 (Pure and Applied Chemistry, Vol.66, No.5, page 1116, 1994) organic compounds are thought of as consisting of a relatively unreactive backbone, for example a chain of sp³ hybridized carbon atoms, and one or several functional groups. The functional group G is an atom, or a group of atoms that has similar chemical properties whenever it occurs in different compounds. It defines the characteristic physical and chemical properties of families of organic compounds.

Preferably, FG is a functional group selected from amino group, isocyanate group and epoxy group. More preferably FG is an amino or an epoxy group.

The integer a is generally from 0 to 2, preferably 0 or 1. Good results were obtained with a=0.

The integer p is generally from 1 to 3, preferably 1 or 2. Good results were obtained with p=1.

Generally, each Rₓ is independently a linear, branched or cyclic C₁ to C₈ alkyl group. Preferably each Rₓ is independently a linear C₁ to C₈ alkyl group. More preferably Rₓ is a methyl group.

Generally, each R_{y} is independently a linear, branched or cyclic C₁ to C₄ alkyl group. Preferably each R_{y} is independently a linear C₁ to C₄ alkyl group. More preferably R_{y} is a methyl or an ethyl group. Good results were obtained with R_{y} being a methyl group.

Generally, R_{z} is independently a linear, branched or cyclic C₁ to C₁₂ alkanediyl group optionally containing one or more heteroatom selected from oxygen, sulfur and nitrogen. Preferably each R_{z} is independently a linear C₁ to C₁₂ alkanediyl group. Good results were obtained with R_{z} a linear C₁ to C₁₂ alkanediyl group containing one or more nitrogen atom.

In some preferred embodiments compound (AKS) is selected from the list consisting of compounds represented by formulae (I) to (LII):

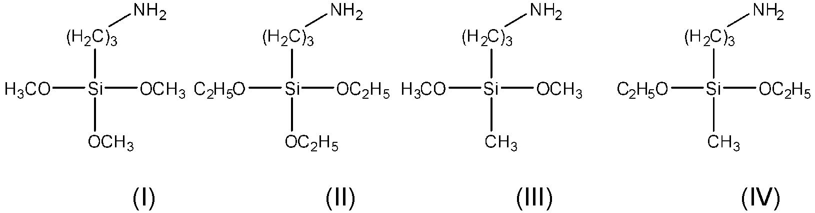

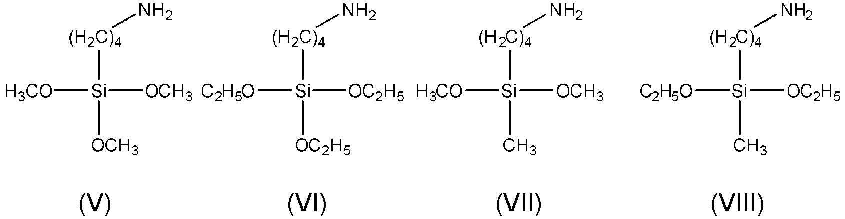

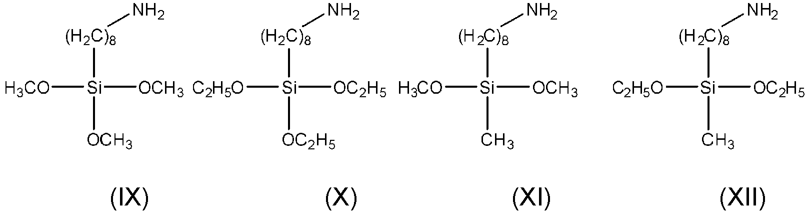

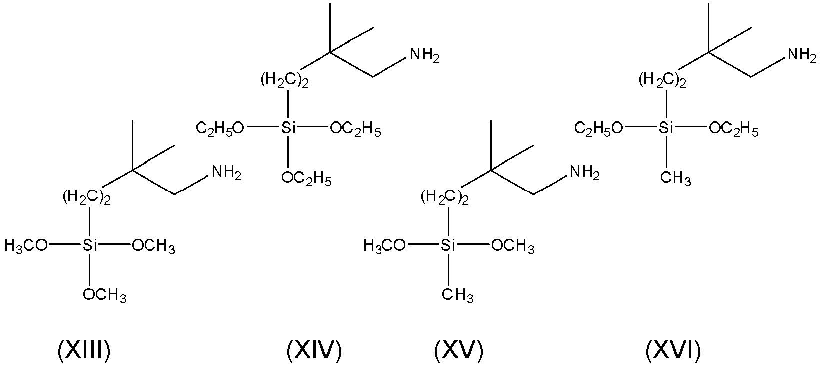

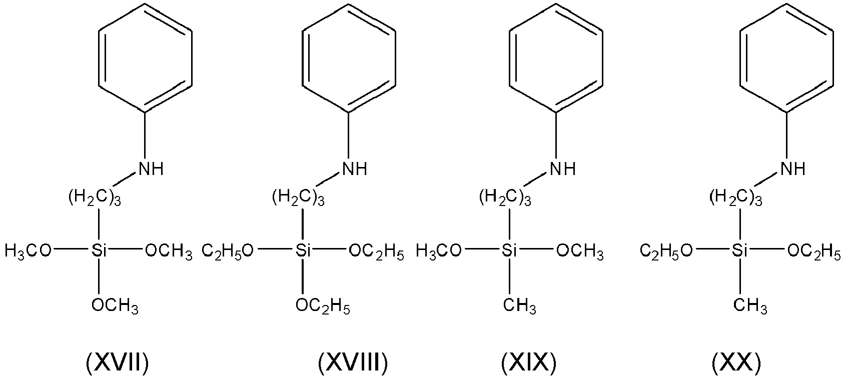

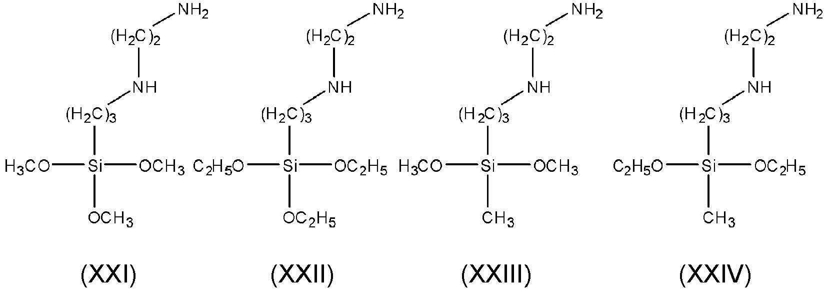

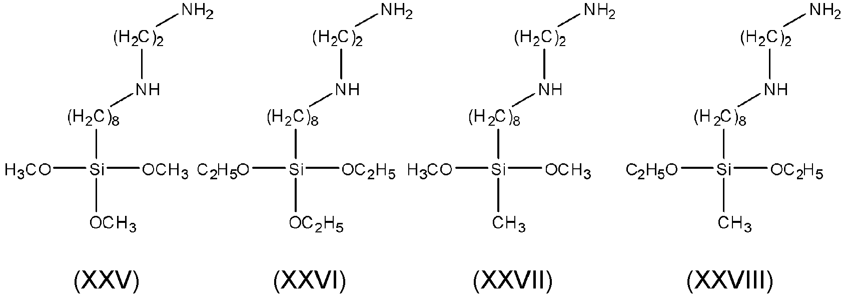

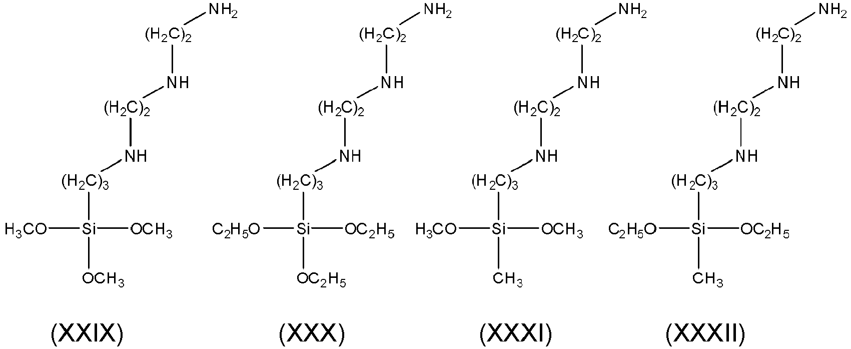

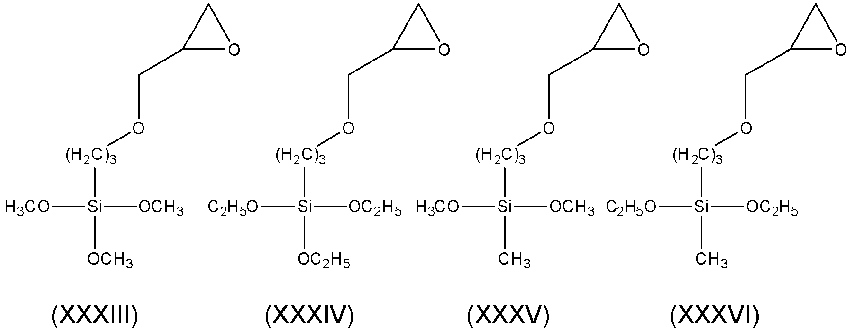

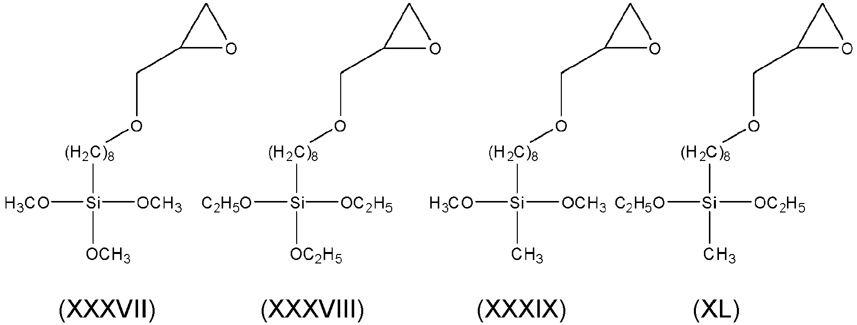

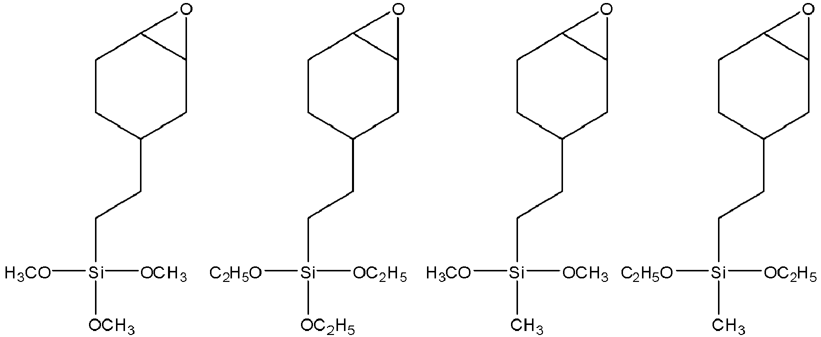

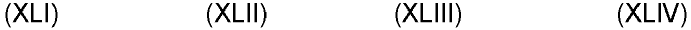

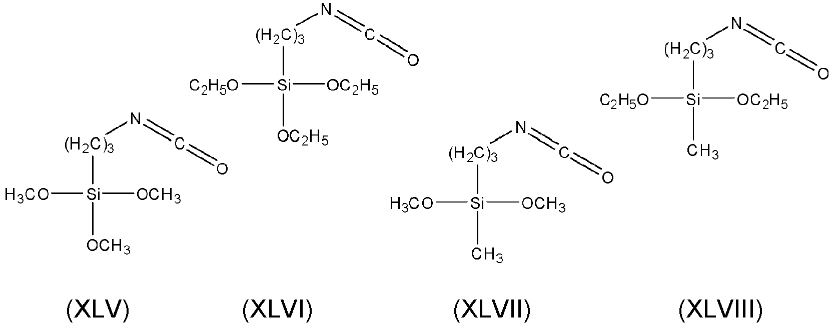

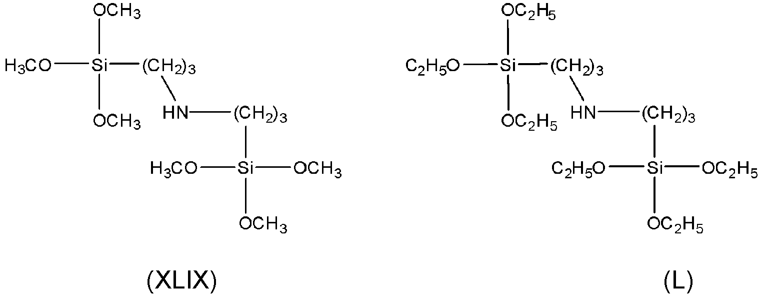

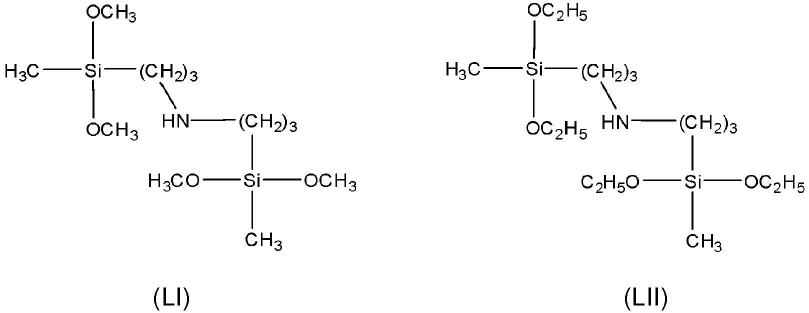

Preferably, compound (AKS) is selected from the list consisting of compounds represented by formulae (I) to (XVI), (XXXIII) to (XLIV) and (XLV) to (XLVIII).

More preferably, compound (AKS) is selected from the list consisting of compounds represented by formulae (I) to (IV), (XXXIII) to (XXXVI) and (XLI) to (XLIV).

More preferably, compound (AKS) is selected from the list consisting of compounds represented by formulae (I), (II), (XXXIII), (XXXIV), (XLI) and (XLII).

Good results were obtained with compounds represented by formula (XXXIII).

The amount of compound (AKS) in composition (C) is at least 0.10 wt%, at least 0.15 wt%, or at least 0.20 wt%, based on the total weight of composition (C).

The amount of compound (AKS) in composition (C) is at most 5.00 wt%, at most 3.50 wt%, or at most 2.00 wt%, based on the total weight of composition (C).

Good results were obtained with an amount of compound (AKS), preferably the compound of formula (XXXIII), ranging from 0.10 to 2.00 wt%, preferably from 0.15 to 1.50 wt%, or from 0.20 to 1.00 wt%, based on the total weight of the composition.

### The polyorganosiloxane polymer having at least one epoxy functional group [polymer (POS)]

The polymer (POS) is a polyorganosiloxane polymer. The expression "polyorganosiloxane" is hereby used according to its usual meaning, that is to say to designate a polymer comprising a sequence of recurring units, whereas said recurring units comprise an organo-substituted catenary silicium atom bound to a catenary oxygen atom.

Polymer (POS) comprises at least one epoxy or amine functional group: it may comprise only one of said epoxy or amine functional groups, or it may comprise a plurality thereof. Further, said at least one epoxy or amine functional group may be comprised in polymer (POS) as a pendant group in a recurring unit (e.g. as substituent on a organo group bonded to a catenary silicium atom), or may be comprised as chain end.

Within the context of the present invention, the expression "amine functional group" when used in connection with polymer (POS) is intended to encompass groups of formula -NRₐₘ₁Rₐₘ₂, with each of Rₐₘ₁ and Rₐₘ₂ being H or an hydrocarbon group, preferably at least one of Rₐₘ₁ and Rₐₘ₂ being H, most preferably both Rₐₘ₁ and Rₐₘ₂ being H, that is to say, amine group being of formula -NH₂.

Similarly, the expression "epoxy functional group" is hereby used according to its usual meaning, i.e. designating a functional group including an oxygen atom joined by single bonds to two adjacent carbon atoms, thus forming a three-membered epoxide ring; in particular the epoxy functional group encompasses notably groups of formula: 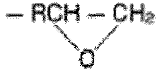 with R being H or CH₃.

The polymer (POS) generally complies with formula (II): 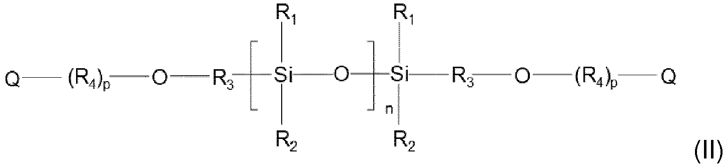 wherein:
each of Q, equal to or different from each other, is one group selected from the group consisting of epoxy groups and amine groups, preferably an epoxy group, or a group selected from C₁-C₁₀ alkyl groups and C₆-C₁₀ aromatic groups, with the proviso that at least one Q is one group selected from the group consisting of epoxy groups and amine groups, preferably is an epoxy group;
R₁, R₂, R₃ and R₄, equal to or different from each other, are selected from C₁-C₁₀ alkyl groups and C₆-C₁₀ aromatic groups,
n varies between 2 and 70, preferably between 2 and 60, and
p is zero or 1.

Preferably, R₁ and R₂, equal to or different from each other, represent an alkyl group such as methyl, ethyl, or propyl, or an aromatic group such as phenyl or naphthyl. Preferably, R₃ and R₄ are alkylene groups such as methylene, ethylene, or propylene, or aromatic groups such as phenylene.

According to certain preferred embodiments, the polymer (POS) is a polydimethylsiloxane (PDMS) polymer, wherein R₁ and R₂ are methyl groups, R₃ is a propylene group, p is 1 and R₄ is a methylene group.

According to these embodiments, the polymer (POS) generally complies with formula (III): 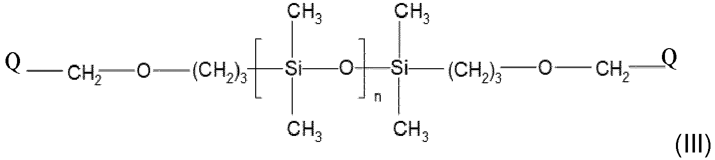 wherein:
each of Q, equal to or different from each other, is a group selected from the group consisting of epoxy groups and amine groups, preferably an epoxy group, or a group selected from C₁-C₁₀ alkyl groups and C₆-C₁₀ aromatic groups, with the proviso that at least one Q is group selected from the group consisting of epoxy groups and amine groups, preferably an epoxy group, preferably is an epoxy group; and
n varies between 2 and 70, preferably between 2 and 60.

According to preferred embodiments, in polymer (POS), according to both formulae sketched above, each of Q is an epoxy groups, that is to say that in polymer (POS) each chain end is an epoxy group.

According to preferred embodiments, the polymer (POS) has a weight-average molecular weight (Mw) of at most 5,000 g/mol, at most 4,800 g/mol, at most 4,500 g/mol, at most 4,000 g/mol, at most 3,000 g/mol, at most 2,000 g/mol, at most 1,200 g/mol, as determined by gel permeation chromatography.

According to different embodiments, the polymer (POS) has a weight-average molecular weight (Mw) of at least 200 g/mol, at least 300 g/mol, at least 400 g/mol, as determined by gel permeation chromatography.

Composition (C) may optionally contain polymer (POS). When present, polymer (POS) is typically in an amount of at least 0.10 wt%, at least 0.50 wt%, or at least 0.70 wt%, based on the total weight of composition (C).

The amount of polymer (POS) in composition (C) is at most 5.00 wt%, at most 4.50 wt%, or at most 4.00 wt%, based on the total weight of composition (C).

Good results were obtained with an amount of polymer (POS) ranging from 0.70 to 3.00 wt%, preferably from 1.00 to 2.50 wt% based on the total weight of the composition.

### Other ingredients

Composition (C) may optionally contain one or more than one organic antioxidant, hereby referred to as 'compound (O)'.

Compounds (O), when used in composition (C) are generally selected from the group consisting of hindered amine compounds, hindered phenol compounds, and phosphorous compounds.

The expression "hindered amine compound" is used according to its customary meaning in this field and generally intended to denote derivatives of 2,2,6,6-tetramethyl piperidine well known in the art (see for example : Plastics Additives Handbook, 5th ed., Hanser, 2001). The hindered amine compound of the composition according to the present invention may either be of low or high molecular weight.

Generally, the hindered amine compound used in the present invention comprises at least one piperidine moiety possessing alkyl substituents in alpha position to the amine group; generally the compound comprises at least one tetraalkylpiperidine, preferably a tetramethylpiperidine group.

The hindered amine compounds of low molecular weight have typically a molecular weight of at most 900, preferably at most 800, more preferably of at most 700, still more preferably at most 600 and most preferably of at most 500 g/mol.

As said, compounds (O) are generally selected from the group consisting of hindered amine compounds, hindered phenol compounds, and phosphorous compounds selected from the group consisting of phosphite esters, phosphonites and mixtures thereof.

Preferably, the compound (O) is selected from the group consisting of hindered phenol compounds, and phosphite esters represented by the formula P(OR)₃, wherein each of R, can be the same or different and is independently selected from the group consisting of a C₁₋₂₀ alkyl, C₃₋₂₂ alkenyl, C₆₋₄₀ cycloalkyl, C₇₋₄₀ cycloalkylene, aryl, alkaryl or arylalkyl moiety.

More preferably, the compound (O) is selected from the group consisting of:
- hindered phenol compounds selected from the group consisting of (d1) tetrakis [methylene-3-(3,5-di-tert-butyl-4-hydroxyphenyl-propionate)] methane (aka e.g. Irganox^{®} 1010), (d2) thiodiethylene bis[3-(3,5-di-tert.-butyl-4-hydroxy-phenyl)propionate] (aka e.g. Irganox^{®} 1035 ), (d3) Octadecyl-3-(3,5-di-tert.butyl-4-hydroxyphenyl)-propionate (aka e.g. Irganox^{®} 1076), and (d4) N,N'-hexane-1,6-diylbis(3-(3,5-di-tert.-butyl-4-hydroxyphenylpropionamide)) (aka e.g. Irganox^{®} 1098 ); and
- phosphite esters selected from the group consisting of (e3) Tris(2,4-di-tert.-butylphenyl)phosphite (aka e.g. IRGAFOS^{®} 168); (e5) Bis(2,4-di-tertbutylphenol)pentaerythritol diphosphate (aka e.g. IRGAFOS^{®} 126); (e6) Bis(2,6-di-ter-butyl-4-methylphenyl)pentaerythritol-diphosphite (aka e.g. ADK STAB PEP-36); (e8) bis(2,4-di-tert-butyl-6-methyl phenyl) ethyl phosphite (aka e.g. IRGAFOS^{®} 38).

More preferably, the compound (O) is selected from the group consisting of:
- (d4) N,N'-hexane-1,6-diylbis(3-(3,5-di-tert.-butyl-4-hydroxyphenylpropionamide)) (aka e.g.Irganox^{®} 1098 ); and
- (e3) Tris(2,4-di-tert.-butylphenyl)phosphite (aka e.g. IRGAFOS^{®} 168).

Composition (C) may comprise at least one antioxidant compound in an amount of 0.03 to 0.40 % wt, with respect to the weight of composition (C).

Compound (O) may optionally be comprised in composition (C) in an amount of at least 0.04 wt%, preferably at least 0.05 wt%, with respect to the weight of composition (C). Further, compound (O) is generally comprised in composition (C) in an amount of at most 0.40 wt%, preferably at most 0.35 wt%, more preferably at most 0.30 wt%, with respect to the weight of composition (C).

Composition (C) may optionally comprise at least one filler in an amount up to 40.0 wt%, based on the total weight of composition (C).

The at least one filler may be present in composition (C) in an amount of at least 1.0 wt%, at least 5.0 wt% based on the total weight of composition (C).

The at least one filler may be present in composition (C) in an amount of at most 40.0 wt%, at most 35.0 wt%, at most 30.0 wt.% based on the total weight of composition (C).

The filler is typically selected from mineral fillers, such as talc, mica, kaolin, calcium carbonate, calcium silicate, magnesium carbonate, wollastonite, titanium dioxide, potassium titanate, silica, kaolin, chalk, alumina, and the like. Good results were obtained with talc as a filler.

The composition may also comprise at least one additional additive, for example in an amount of less than 10 wt%, said additive being selected from the group consisting of colorants, dyes, pigments, lubricants, plasticizers, flame retardants, nucleating agents, processing aids, fusing agents, electromagnetic absorbers and combinations thereof, wherein the wt% is based on the total weight of the composition (C).

Said at least one additional additive may be present in the composition (C) in an amount of less than 5.0 wt%, less than 3.0 wt%, less than 2.0 wt%, less than 1.0 wt%, based on the total weight of the composition (C).

Composition (C) generally comprise polymer (PAS) as major polymer component. While the overall amount of polymer (PAS) in the composition may vary, depending notably on the presence of additional ingredients, such as fillers, it is nonetheless understood that polymer (PAS) will represent at least 50.0 wt%, preferably at least 60.0 wt%, more preferably at least 75.0 wt%, with respect to the weight of composition (C). Upper amount will be solely limited by the mandatory presence of compound (AKS), and hence will not generally go beyond 99.9 wt%.

Good results were obtained with compositions composition (C) comprising, preferably consisting of:
- 80.0 to 90.0 wt% of a PPS polymer;
- 0.1 to 1.0 wt% of an alkoxysilane [compound (AKS)];
- 0.5 to 2.0 wt% of a polyorganosiloxane polymer having at least one epoxy functional group [polymer (POS)];
- 0.0 to 15.0 wt% of an inorganic filler; and
- 0.0 to 1.0 wt% of an antioxidant,
all percentages being referred to the total weight of the composition (C).

Compound (AKS) is preferably compound of formula XXXIII.

The filler is preferably talc.

### Method of making the insulated wire

Any method known to the person skilled in the art may be used for the manufacture of the insulated wire of the invention. Advantageously, the insulated wire is prepared by an extrusion coating process wherein composition (C) in the molten state is extrusion coated directly on the surface of the conductor.

The method of manufacturing the insulated wire of this embodiment includes: a preparing step of preparing composition (C); a preheating step of preheating a conductor; an extrusion coating step of extruding composition (C) so as to coat the outer circumference of the conductor; and a cooling step of cooling the resin composition to form an insulating layer.

The process may optionally comprise other steps, such as for example a plasma treatment step on the conductor to further improve the adhesion of the insulating material to the metallic surface of the conductor.

First, composition (C) for forming the insulating layer is prepared. In this step polymer (PAS); 0.1 to 5.0 wt% of compound (AKS); and the optional other ingredients (polymer (POS); inorganic filler; and antioxidant) are mixed. The mixing can be performed using a publicly-known kneading device such as a kneader, a Banbury mixer, a roll, and a twin-screw extruder, etc.

Subsequently or at the same time, the conductor is preheated before extrusion-coating of composition (C) onto the outer circumference. Thus, when the melted polymer composition is extruded on the outer circumference of the conductor, the composition is prevented from being cooled by the conductor, and the adhesion of the formed insulating layer can be increased. The temperature for heating the conductor is preferably set to a temperature of a melting point or slightly lower of the composition, for example, a temperature of a melting point or slightly lower of the PAS resin.

When the conductor is preheated, it is preferable to heat the conductor in an inert gas atmosphere. Thus, oxidation of the conductor, and reduction in the adhesion of the insulated layer due to formation of an oxide film can be suppressed.

Subsequently, the heated conductor is introduced to an extruder. Then, the composition (C) is extruded by the extruder with a prescribed thickness to coat the outer circumference of the conductor.

Subsequently, the extruded composition is cooled to form the insulating layer. In the cooing step, in order to increase the crystallinity of polymer PAS contained in the insulating layer, preferably the melted resin composition is rapidly cooled until the temperature reaches a melting point or less of polymer PAS and a crystallization temperature or more (for example, 180 degrees centigrade) of the PPS resin, and thereafter is gradually cooled at a temperature in the vicinity of the crystallization temperature (for example, 180 degrees centigrade to 100 degrees centigrade). Accordingly, crystallization of the PPS resin can be encouraged, and the crystallinity of the PPS resin in the obtained insulated layer can be increased.

A wide variety of suitable methods and/or techniques may be utilized to form, produce, or otherwise provide the conductor. For instance, the conductor might be formed in tandem with the application of a portion or all of the insulating layer. In other words, conductor formation and application of the insulating layer may be conducted in tandem. Alternatively, the conductor with desired dimensions may be preformed or obtained from an external source.

All embodiments described above in connection with composition (C) are applicable here, *mutatis mutandis.*

### Articles and applications

The present invention also relates to an article, part or composite material, comprising the insulated wire as described above. The article, part or composite material of the present invention find several uses in automotive applications, electric and electronic applications, and consumer goods. They are used for instance to manufacture windings of electric motors, transformers, inductors, generators, headphones, loudspeaker coils, hard drive head positioners, electromagnets, as well as other devices.

Should the disclosure of any patents, patent applications, and publications which are incorporated herein by reference conflict with the description of the present application to the extent that it may render a term unclear, the present description shall take precedence.

The invention will now be described with reference to the following examples, whose purpose is merely illustrative and not intended to limit the scope of the invention.

### Experimental section

### Materials

Polymer PAS1: Ryton^{®} QA200N PPS is a poly(phenylene sulfide) (PPS) commercially available from Solvay Specialty Polymers USA, LLC.
Polymer PAS2: Ryton^{®} QA120P PPS is a poly(phenylene sulfide) (PPS) commercially available from Solvay Specialty Polymers USA, LLC.
Polymer POS1: KF105 is a dual-end type/epoxy modified reactive silicone fluid of formula: 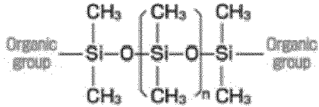 whereas organic group is 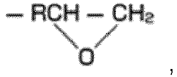 with R = H or CH₃, whereas n is such that the viscosity at 25°C is 15 and the equivalent weight is 490 g/mol, commercially available from Shin-Etsu.
ALK1: compound of formula (XXXIII), Silquest^{®} A-187 commercially available from Momentive

### Methods

### Mechanical properties

Tensile properties on films were determined at room temperature (23°C) according to ASTM 882 at a speed of 1 mm/min.

### Electrical properties

Electrical properties on films (dielectric strength and breakdown voltage) were determined according to ASTM 3032.

### General procedure for making films

Films were produced from pellets. The prepared pellets were processed into films with a thickness of 100 µm and a width of 8-9 cm using a single screw extruder from OCS (Optical Control System, GmbH). The extruder employed a single-stage non-vented screw with a diameter of 20 mm and an LID ratio of 30. The extruder barrel comprised four heated sections, which were sequentially operated from rear to front at temperature settings in the range of 280-315 °C. Simultaneously, the film die maintained a temperature of 305-320°C. The film was drawn and formed on two chill rolls, set at temperatures of 175-195°C and 90-145°C for the first and second rolls, respectively. The chiller rolls were used to control the rate of crystallization. The throughput rate of the film and compound was determined by a take-up rate of the film at approximately 1-3 m/min, while the extruder operated at a screw speed of 17-40 rpm based on the film thickness. The ingredients and their reciprocal amounts in the compositions, main electrical properties and the mechanical properties of the films are reported in Table 1.
the samples are reported in Table 1.

**Table 1 : Compositions, mechanical and electrical testing on 100 µm films**

| | CE1 | E1 | E2 |
|---|---|---|---|
| PAS1 (wt%) | 100 | 99.50 | 98.20 |
| ALK1 (wt%) | | 0.50 | 0.30 |
| POS1 (wt%) | | | 1.50 |
| | | | |
| Tensile Modulus (GPa) | 3.50 | 3.66 | 2.90 |
| Tensile Strength @ Break (MPa) | 75.8 | 86.2 | 64.6 |
| Tensile Elongation @ Break (%) | 7.1 | 120 | 22 |
| | | | |
| Dielectric Strength (kV/mm) | 106.1 | 128.7 | 137.7 |
| Breakdown Voltage (kV) | 10.6 | 12.9 | 13.8 |

The results obtained on 100 µm films show that composition (C) has better mechanical properties than the poly(phenylene sulfide) polymer itself while the electrical properties are maintained at the good levels required for the application.

### Preparation of Wire Samples

Select formulations were extruded onto copper wire for testing. Bare round copper wire of size AWG12 was coated with polymer using an Entwistle 1.5-in (3.8 cm) extruder and Unitek fixed-center crosshead. Wire was cleaned and then preheated to the desired temperature between 300 and 450 °C using a Zumbach induction heater before polymer was extruded onto the wire. Pressure tooling was used with a 0.082-in (0.21 cm) tip and a 0.090-in (0.23 cm) die. The line was run between 12 and 37 m/min and a 0.005-in (0.12 mm) wall thickness was targeted. The wire was cooled in ambient air before being collected for testing.

### Testing

### Ageing tests

The samples were heat aged in a re-circulating air oven (Thermo Scientific Heratherm OMH60) set at 200°C for 500 hours).The samples were removed from the oven, allowed to cool to room temperature and placed into sealed aluminium lined bags until ready for testing.

Chemical aging was carried out by immersing the cables for 500 hours at 135°C in ATF Shell D971.

Properties were measured according to the same procedure as before ageing.

Adhesion properties were measured on copper wire cable comprising the insulating layer. The specimen for the test consists of a sheath + copper wire section of 350mm with a circumferential incision in the insulating layer at the center of the specimen.

The specimen was subsequently fixed to the two ends of an Instron 5967 instrument with the clamps and stretched by 15% (45.0mm) at a speed of 300 mm/min and at 23°C.

A preload of 1N was used. The aim is to verify if with the elongation the coating moves by a length greater than the cable diameter, 2.0mm in this case, compared to the mark made on the copper at the incision level. All samples passed the test.

Windability test was carried out by winding the wires over a mandrel having diameter of 5.0 mm. The wire was visually inspected after being coiled and subsequently unwound, and the absence of cracks determines whether the test passed or failed. The following scale of assessment was given:
- formation of severe cracks: -;
- formation of superficial cracks: o;
- no cracks: +

U-bend test was carried out by bending wire on the short side on 2 and 3 mm diameter mandrels, and on the long side on a 3 mm diameter mandrel. Bent cable was visually inspected by optical microscopy, and the absence of cracks determines whether the test passed or failed.

Torsion test was carried out by twisting the cable 8 times Hholding one of the two ends in place. The cable was visually inspected after being twisted, and the absence of cracks determines whether the test passed or failed.

Properties of wire specimens before and after aging at 200°C and after chemical ageing are summarized in Table 2 below.

The data in Table 2 show that the use of composition (C) in the preparation of insulating layers is effective in achieving retention of properties even after ageing.

**Table 2**

| | CE1 | E1 | E2 |
|---|---|---|---|
| PAS1 (wt%) | 100 | 99.50 | 98.20 |
| ALK1 (wt%) | | 0.50 | 0.30 |
| POS1 (wt%) | | | 1.50 |

| Before Ageing | | | |
|---|---|---|---|
| Torsion | pass | pass | pass |
| Windability | o | + | + |
| U bend test | pass | pass | pass |
| Adhesion | pass | pass | pass |

| After thermal ageing | | | |
|---|---|---|---|
| | pass | pass | pass |
| Torsion | | | |
| Windability | - | o | o |
| U bend test | pass | pass | pass |

| After chemical ageing | | | |
|---|---|---|---|
| Torsion | pass | pass | pass |
| Windability | - | o | o |
| U bend test | pass | pass | pass |

## Claims

1. An insulated wire, comprising:
- a conductor; and
- an insulating layer arranged on an outer circumference of the conductor, wherein the insulating layer is made of a composition [composition (C)] comprising or consisting of:
- a poly(arylene sulfide) polymer [polymer (PAS)];
- 0.1 to 5.0 wt% of an alkoxysilane [compound (AKS)];
- 0.0 to 5.0 wt% of a polyorganosiloxane polymer having at least one epoxy functional group [polymer (POS)];
- 0.0 to 40.0 wt% of an inorganic filler; and
- 0.0 to 1.0 wt% of an antioxidant,
all percentages being referred to the total weight of the composition (C).

2. The insulated wire according to claim 1, wherein the polymer (PAS) comprises recurring units (R_{PAS1}) represented by the following formula:
[-Ar1-S-] (R_{PAS1})
wherein
-Ar₁- is selected from the group of formulae consisting of: 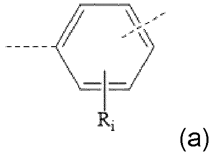 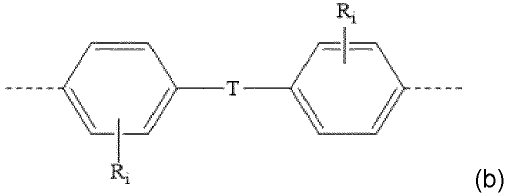 and 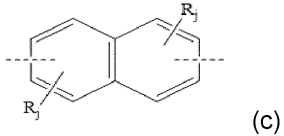
wherein:
R, at each instance, is independently selected from the group consisting of a C₁-C₁₂ alkyl group, a C₇-C₂₄ alkylaryl group, a C₇-C₂₄ aralkyl group, a C₆-C₂₄ arylene group, and a C₆-C₁₈ aryloxy group;
T is selected from the group consisting of a bond, -CO-, -SO₂-, -O-, -C(CH₃)₂-, -C(CF₃)₂-, phenyl and -CH₂-;
i, at each instance, is an independently selected integer from 0 to 4;
j, at each instance, is an independently selected integer from 0 to 3.

3. The insulated wire according to claim 1 or 2, wherein polymer (PAS) is a poly(phenylene sulfide) (PPS) polymer having units (R_{PAS1}) of formula (a1) 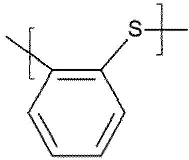 where i is zero, i.e. having units (R_{PAS1}) of formula: 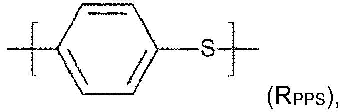 and optionally additionally comprising units of any of formulae: 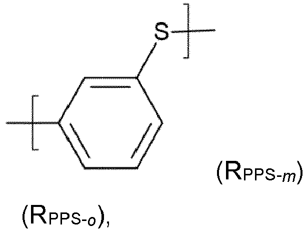 wherein when polymer (PPS) further comprises units (R_{PPS-*m*}) and/or (R_{PPS-*o*}), the total concentration of recurring units (R_{PPS-*m*}) and/or (R_{PPS-*o*}) in the polymer (PPS) is at most 10 mol%, at most 5 mol%, at most 3 mol%, at most 1 mol%, based on total amount of units (R_{PPS}), (R_{PPS-*m*}) and (R_{PPS-*o*}).

4. The insulated wire according to any one of the preceding claims wherein composition (C) comprises compound (AKS) in an amount ranging from 0.10 to 2.00 wt%, preferably from 0.15 to 1.50 wt%, or from 0.20 to 1.00 wt%, based on the total weight of the composition.

5. The insulated wire according to any one of the preceding claims wherein compound (AKS) is represented by the following formula: 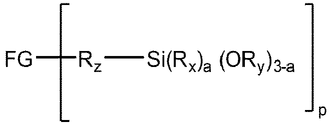 wherein a is an integer from 0 to 2; p is an integer from 1 to 3; each Rx is, independently of each other, selected from a linear, branched or cyclic C1 to C8 alkyl group; each Ry is, independently of each other, a linear or branched C1 to C4 alkyl group; each Rz is, independently of each other, a linear, branched or cyclic C1 to C12 alkanediyl group, optionally containing one or more heteroatom selected from oxygen, sulfur and nitrogen; and wherein FG is selected from the group consisting of hydrogen, an halogen or a functional group.

6. The insulated wire according to any one of the preceding claims wherein composition (C) comprises from 0.70 to 3.00 wt%, preferably from 1.00 to 2.50 wt% based on the total weight of the composition of a polyorganosiloxane polymer having at least one epoxy functional group [polymer (POS)].

7. The insulated wire according to any one of the preceding claims wherein the polyorganosiloxane polymer having at least one epoxy functional group [polymer (POS)] is represented by formula (II) 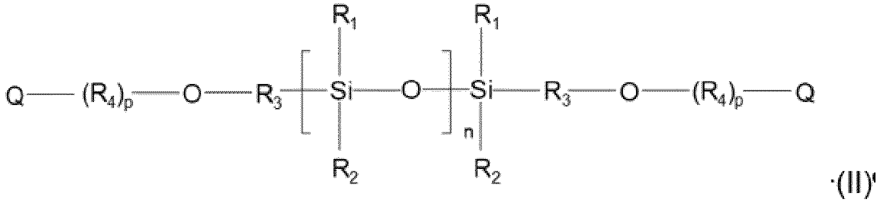 wherein:
each of Q, equal to or different from each other, is one group selected from the group consisting of epoxy groups and amine groups, preferably an epoxy group, or a group selected from C₁-C₁₀ alkyl groups and C₆-C₁₀ aromatic groups, with the proviso that at least one Q is one group selected from the group consisting of epoxy groups and amine groups, preferably is an epoxy group; R₁, R₂, R₃ and R₄, equal to or different from each other, are selected from C₁-C₁₀ alkyl groups and C₆-C₁₀ aromatic groups; n varies between 2 and 70, preferably between 2 and 60; and p is zero or 1.

8. The insulated wire according to any one of the preceding claims wherein composition (C) comprises at least one filler in an amount up to 40.0 wt%, based on the total weight of composition (C).

9. The insulated wire according to claim 8 wherein the filler is selected from mineral fillers, such as talc, mica, kaolin, calcium carbonate, calcium silicate, magnesium carbonate, wollastonite, titanium dioxide, potassium titanate, silica, kaolin, chalk, alumina.

10. The insulated wire according to any one of the preceding claims wherein composition (C) comprises at least one antioxidant.

11. The insulated wire according to any one of the preceding claims wherein the conductor is formed from copper, aluminum, annealed copper, oxygen-free copper, silver-plated copper, nickel plated copper, copper clad aluminum ("CCA"), silver, gold, a conductive alloy, a bimetal, carbon nanotubes.

12. The insulated wire according to any one of the preceding claims wherein the conductor has a circular or rectangular cross-section.

13. A process for manufacturing the insulated wire of any one of the preceding claims, the process comprising: a preparing step of preparing composition (C); a preheating step of preheating a conductor; an extrusion coating step of extruding composition (C) so as to coat an outer circumference of the conductor; and a cooling step of cooling the resin composition to form an insulating layer.

14. An article, part or composite material comprising the insulated wire of anyone of Claims 1 to 12.

15. The article of claim 14 selected from electric motor, transformer, inductor, generator, headphones, loudspeaker coil, hard drive head positioner, electromagnet.
